Europäisches Patentamt

European Patent Office

Office européen des brevets

(19)

(11) Publication number: **0 037 835**
**A1**

## EUROPEAN PATENT APPLICATION

published in accordance with Art. 158(3) EPC

(21) Application number: 80900785.9

(22) Date of filing: **22.04.80**

Data of the international application taken as a basis:

(86) International application number: **PCT/JP 80/00083**

(87) International publication number: **WO 81/00069 (22.01.81 81/2)**

(51) Int. Cl.³: **B 23 B 29/32**

(30) Priority: **02.07.79 JP 91386/79**

(43) Date of publication of application: **21.10.81** **Bulletin 81/42**

(84) Designated Contracting States: **DE FR GB**

(71) Applicant: **IKEGAI TEKKO KABUSHIKI KAISHA, 1-21, Shiba 4-chome, Minato-ku, Tokyo 108 (JP)**

(72) Inventor: **KARUKOMI, Yutaka, 27-2, Komazawa 3-chome, Setagaya-ku Tokyo 154 (JP)**

(74) Representative: **Dealtry, Brian et al, Eric Potter & Clarkson 14, Oxford Street, Nottingham NG1 5BP (GB)**

(54) **TURRET.**

(57) A turret which can efficiently mount a number of cutting tools for a machine tool such as a numerically controlled lathe or the like. An indexing shaft (9) mounting the turret (8) is disposed in parallel with the surface of the bed, and at right angles to the axis (S) of a spindle (2) for holding a workpiece (W), but does not cross the axis (S). The turret (8) incorporates a polygonal section wherein the respective side surfaces from cutting tool mounting surfaces (F). The respective tool mounting surfaces (F) accomodate standards for mounting tool retainers (H), so that a plurality of tool retainers (H) can be mounted at desired positions in the direction perpendicularly crossing the axis (S) in parallel with each other. When one of the tool mounting surfaces (F) is indexed to be disposed at a cutting position, it is disposed in parallel with the surface of the bed at the position not crossed by the axis (S). Accordingly, a number of cutting tools (T) can be mounted on the turret (8), and the turret (8) can still be simply reduced in its size. In addition, the cutting work can be safely conducted and yet improved in efficiency.

SPECIFICATION

0037835

## TITLE OF THE INVENTION

MACHINE TOOL

## FIELD OF THE INVENTION

This invention relates to machine tools such as numerically controlled lathes and particularly to machine tools having an improved turret.

## BACKGROUND ART

As is well known, a tool support is an important constituent unit of a numerically controlled lathe and has a great influence in determining the performance of the lathe. Rigidity, indexing accuracy, indexing time, the number of tools and tool mounting and removing operations are considered to be factors in determining the value of the tool support.

A wide variety of tool support for use in numerically controlled lathes have heretofore been proposed and been in use. Typical examples are (1) an automatic indexing turret system, (2) a non-rotary tool-juxtaposing system, (3) an automatic tool changing system, (4) a manual quick tool changing system.

Features and disadvantages of these systems will

- 1 -

be described.

(1)   The automatic indexing turret system

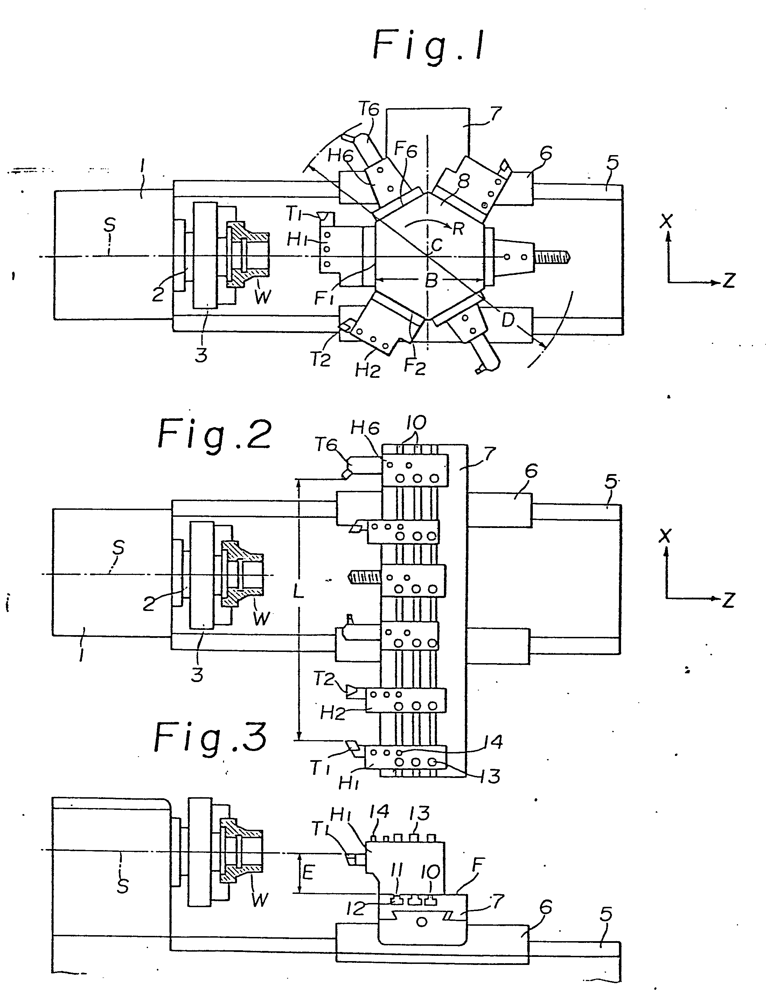

In this system, a turret of the type used hitherto in a turret lathe is incorporated in a numerically controlled lathe. A turning operation includes a centering work and a chucking work, and the number of tools required in the centering work is 4 to 8 while the number of tools required in the chucking work is usually 6 to 12. For this reason, in most cases, one or two turrets of polygonal shape are mounted on a carriage. An example of this system is shown in FIG. 1. FIG. 1 is a plan view of a numerically controlled lathe including a polygonal turret of the type which has been widely used. A spindle 2 is rotatably journalled in a headstock 1 mounted on a bed 5. A chuck 3 on the front end of the spindle 2 is adapted to hold a workpiece W. A carriage 6 is mounted on the bed 5 for reciprocal movement in the Z-axis direction indicated by arrow. A cross slide 7 is mounted on the carriage 6 for reciprocal movement in the X-axis direction. The movements of the carriage 6 and the cross-slide 7 are controlled by servo-motors (not shown). A turret 8 of hexagonal shape is rotatably mounted on the top surface of the cross slide 7. Reference apertures for mounting tools are formed in six tool mounting faces $F_1$, $F_2$ ..... $F_6$ of the turret 8. Tool holders $H_1$, $H_2$ ..... $H_6$ for holding tools. $T_1$, $T_2$ ..... $T_6$ are fixed in the reference apertures. The turret 8 is sequentially rotated in the direction of arrow R about the vertical center line C of an

- 2 -

indexing shaft so that the indexing of the tools $T_1$, $T_2$ ..... $T_6$ is effected. The workpiece W is machined by the thus selected tools $T_1$, $T_2$ ..... $T_6$. In most turrets of this type, the tool holders H correspond in number to the tool mounting faces F. Therefore, in order to increase the number of the tools, the number of the tool mounting faces must be correspondingly increased. As a result, the width B between the opposite faces is also increased. Further, when the number of the tool mounting faces is increased, the tool adjacent to the tool indexed into a machining position tends to interfere with the workpiece. In order to avoid this, the diameter D of a circle generated by the tip end of the tools T must be increased. As a result, a zero point (reference point) of machining for the indexing of the turret is spaced far from the workpiece W, and the inertia load developing during the rotation of the turret is increased. This is disadvantageous in that the overall structure of the apparatus must become bulky. Further, another disadvantage is that operator safety is affected since the diameter D of the circle generated by the tip end of the tools T is increased.

There is also known another type of turret of which the center line of the indexing shaft is arranged in the X-axis direction so that the axis S of rotation of a spindle extends perpendicular to the indexing center line C. The turret of this type permits the operator to have better access to the turret and provides a better operator safety. However, the disadvantages of the bulky structure and increased inertia load are not yet overcome.

(2)    The non-rotary tool-juxtaposing system

A numerically controlled lathe of this type is of such a construction as shown in FIGS. 2 and 3. A carriage 6 is controlled to move along a bed 5 in the Z-axis direction, and a cross-slide 7 is controlled to move along the bed 6 in the X-axis direction. Two or more T-shaped slots 10 are formed in the upper surface F of a cross slide 7 and extend along the entire length thereof in the X-axis direction. One of the slots, for example, the slot closest to a headstock 1 serves as a reference slot for determing the position of the tool holders H in the Z-axis direction. On the other hand, a projection 11 is formed on the lower surface of each tool holder H holding one of the various kinds of tools T. The position of the tool holders T in the Z-axis direction is determined by embedding the projection 11 in the above-mentioned reference T-shaped slot. In this manner, the tool holders $H_1$ to $H_6$ each holding the tools $T_1$ to $T_6$ are mounted side by side on the cross-slide 7 along the length thereof, i.e., in the X-axis direction. The tools $T_1$ to $T_6$ is controlled at each process according to the programming to move in the X- and Z-axis directions so that the workpiece W is sequentially machined by the tools $T_1$ to $T_6$.

This system is advantageous in that the indexing mechanism needed for the lathe with the above-mentioned

- 4 -

automatic indexing turret system (1) is obviated, and that non-cutting time is shortened since no time is required for indexing. However, this system has been found disadvantageous in that when the number of tools is increased, the length and stroke of the cross slide 7 are increased.

(3)  The automatic tool changing system

This system is advantageous in that almost no limitation is imposed on the number of tools and that no interference of the tools with the workpiece occurs. However, this system has also the disadvantage that the apparatus becomes complicated, which results in high manufacturing costs.

(4)  The manual quick tool changing system

This system is advantageous in that the tools do not interfere with the workpiece and that manufacturing costs are low. However, this system is disadvantageous in that operating efficiency is not good when it is used for a turning operation having a relatively short machining time, as the operator has to change the tools manually.

It is an object of this invention to provide a machine tool having a turret type tool support of a compact and simplified construction to which a number of tools can be attached, and by which the machining efficiency can be improved.

Another object is to provide a machine tool in which the diameter of a circle generated by the tip end of the tools is small, thereby improving operator safety.

### DISCLOSURE OF THE INVENTION

A turret type tool support according to this invention has a polygonal cross-section, and the peripheral surfaces of the turret serve as tool mounting faces. A plurality of tool holders are arranged in juxtaposed relation in a direction perpendicular to the axis of a spindle. An indexing shaft of the turret horizontally extends perpendicular to the axis of the spindle and is disposed below the axis of the spindle by a predetermined distance. When the tools are indexed to a machining position, the mounting face carrying the indexed tools is horizontally disposed below the spindle axis so that the tip ends of the indexed tools are disposed in a horizontal plane in which the spindle axis lies. With this arrangement, a number of tools can be attached to the turret, while the turret can be constructed in a compact and simplified manner. Further, since the tools can be mounted on the plurality of tool mounting faces dividedly, the stroke L, which is necessary for properly positioning a selected tool in the X-axis direction after the turret has been indexed, is substantially reduced in comparison with a tool support having a single plane mounting face. Therefore, the amount of overhang of the turret 8 from the cross slide 7 is reduced so that the rigidity of the turret is not impaired.

- 6 -

Further, the plurality of tools T can be arranged on each tool mounting face F of the polygonal turret 8 in such a manner that the position of the tools is adjustable in the X-axis direction. With this arrangement, the number of tool mounting faces of the turret can be reduced in comparison with conventional turrets. Further, since the tool mounting face F indexed to the machining position is horizontally disposed below the axis S of the spindle, the diameter D of the circle generated by the tip end of the tools when the turret 8 is rotated and indexed, can be substantially reduced. Therefore, the zero point (reference point) of machining for the indexing of the turret can be disposed close to the spindle, and also the inertia load developing during the rotation of the turret can be substantially reduced. As a result, the time of return of the turret to the zero point and its indexing time can be substantially shortened.

Further, since the diameter D of the circle generated by the tip end of the tools is small, high operator safety is provided.

Further, since the axis of rotation of the turret 8 is disposed horizontally, the cutting chips produced during the turning operation and accumulated on the tool mounting faces of the turret 8 and the tool holders are easily removed therefrom during the rotation of the turret.

BRIEF DESCRIPTION OF THE DRAWINGS

FIG. 1 is a plan view of a conventional numerically

- 7 -

controlled lathe having an automatic indexing turret;

FIG. 2 is a plan view of a conventional numerically controlled lathe having a non-rotary tool juxtaposing support;

FIG. 3 is a partial front elevational view of the lathe of FIG. 2;

FIG. 4 is a plan view of a numerically controlled lathe according to the present invention;

FIG. 5 is a partial front elevational view of the lathe of FIG. 4; and

FIG. 6 is an enlarged front elevational view of a turret of the lathe of FIG. 5.

## DESCRIPTION OF THE PREFERRED EMBODIMENT OF THE INVENTION

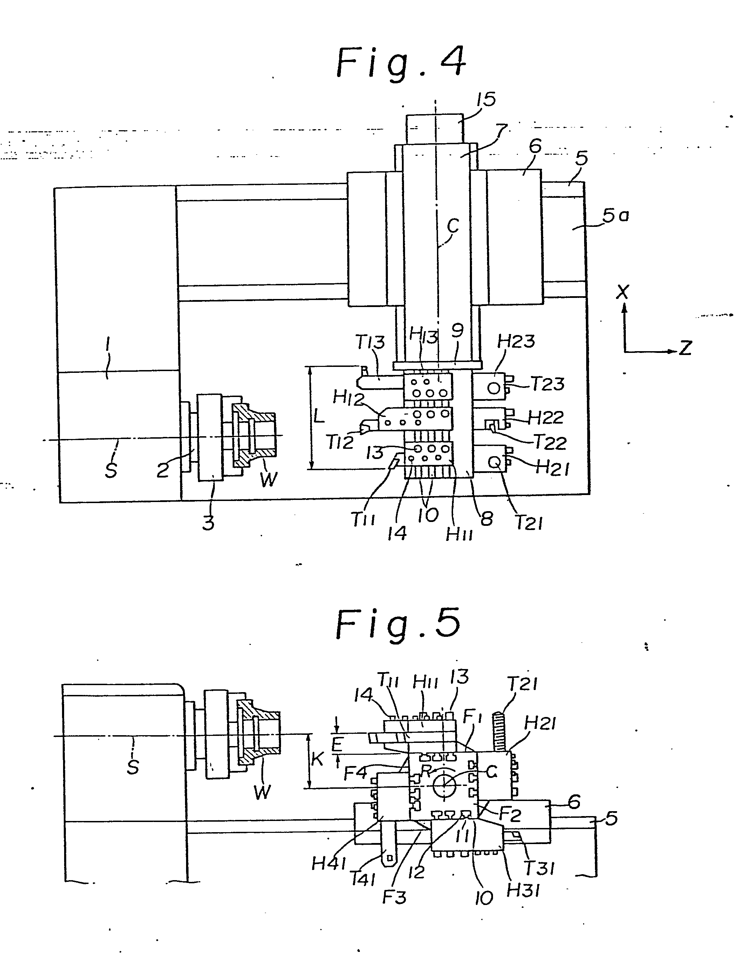

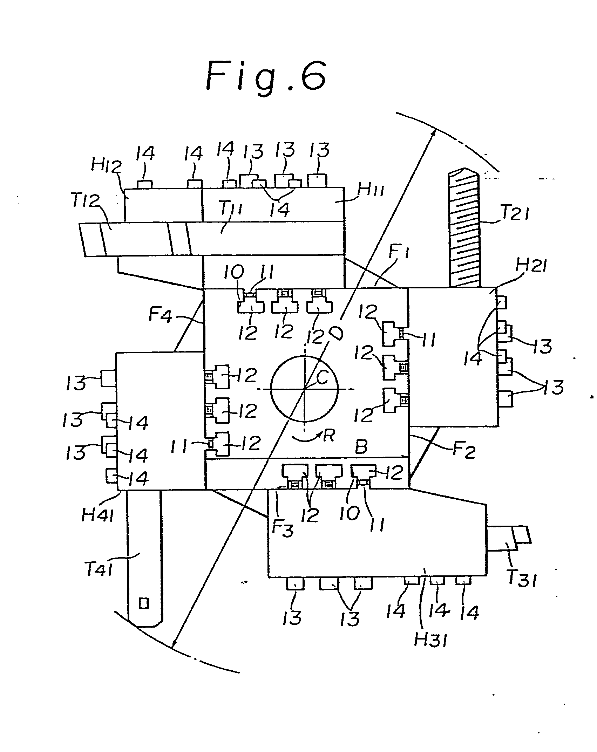

One embodiment of this invention will be described with reference to FIGS. 4 to 6.

A spindle 2 is rotatably mounted on a headstock 1 which is fixedly mounted on the left end of the top surface of a bed 5, the spindle being driven for rotation by a drive means (not shown). A chuck 3 for holding a workpiece W is secured to the front end of the spindle 2. The axis S of the spindle 2 is extended horizontally, and a horizontal guide surface 5a of the bed 5 is disposed below the spindle axis S. A carriage 6 is reciprocally moved under the control of a servo means (not shown) along the guide surface in a direction parallel to the spindle axis S, i.e., in the Z-axis direction. A cross slide 7 is reciprocally moved under the control of a servo means

- 8 -

(not shown) along a guide way of the carriage 6 in a direction perpendicular to the spindle axis S, i.e., in the X-axis direction. An indexing shaft 9 is rotatably journalled in the cross slide 7, the center line C of the indexing shaft 9 is horizontally extended in a direction perpendicular to the spindle axis S (i.e., in the X-axis direction) and is spaced downwardly from the spindle axis S by a distance K. A turret 8 of square shape is secured fixedly to the fron end of the indexing shaft 9. The rear end of the indexing shaft 9 is connected to an indexing drive means, such as an electric motor 15, mounted on the rear end of the cross slide 7. The indexing shaft 9 is rotated and indexed by the motor 15, and its position is controlled by the horizontal movements of the carriage 6 and cross slide 7 by the above-mentioned servo means in the Z- and X-axis directions.

As is the case with the non-rotary tool juxtaposing support shown in FIGS. 2 and 3, two or more T-shaped slots 10 are formed in each of the four tool mounting faces $F_1$, $F_2$, $F_3$, $F_4$ of the turret 8 and extend along the entire length thereof in the X-axis direction. One of the T-shaped slots, for example, the slot closest to the headstock 1 serves as a reference slot for determing the position of tool holders H in the Z-axis direction. On the other hand, a projection 11 is formed on the lower surface of each tool holder H. The tool holder H is properly positioned relative to the tool mounting face F in the X-axis direction by embedding the projection 11 in the above-mentioned reference T-shaped slot of the turret 8. The tool holder H is fixed to any one of the tool mounting faces F of the turret 8 by threading bolts 13 into T-shaped nuts 12 received in the T-shaped slots 10 and tightening bolts 13 passing through the tool holder H. Cutting tool T is secured fixedly to each tool holder H by bolts 14.

With this arrangement, the tool holders $H_{11}$ to $H_{13}$ holding the tools $T_{11}$ to $T_{13}$ are arranged in alignment on the tool mounting face $F_1$ at preselected intervals in the X-axis direction according to the sequence of machining process. Similarly, the other tool holders $H_{21}$ to $H_{23}$, $H_{31}$ to $H_{33}$, $H_{41}$ to $H_{43}$ holding the tools $T_{21}$ to $T_{23}$, $T_{31}$ to $T_{33}$, $T_{41}$ to $T_{43}$ are arranged in alignment on the tool mounting faces $F_2$, $F_3$, $F_4$, respectively.

The operation of the numerically controlled lathe of the above-mentioned construction will now be described.

Firstly, the tool holders $H_{11}$ to $H_{43}$ holding the tools $T_{11}$ to $T_{43}$ are arranged in alignment on the respective tool mounting faces $F_1$ to $F_4$ according to the programming and the tooling layout determined based on the property and shape of the material and desired finish shape of the workpiece W.

Then, the carriage 6 and the cross slide 7 are moved to the zero point of machining. Thereafter, the indexing shaft 9 is rotated in the direction indicated by arrow R so that the tool mounting face $F_1$ having the tools $T_{11}$ to $T_{13}$ is indexed to the machining position for effecting a first machining operation. Thus the indexed

tool mounting face $F_1$ is disposed horizontally and spaced downwardly by a distance E from the spindle axis S.

After this indexing, the carriage 6 and the cross slide 7 are moved respectively by the servo means in the Z- and X-axis directions according to the programming so that the rotating workpiece W is machined by the tools $T_{11}$ to $T_{13}$ sequentially.

When the tools $T_{11}$ to $T_{13}$ are not sufficient to carry out the required maching, the turret 8 is once returned to the zero point of machining, and the indexing shaft 9 is further rotated by 90 degrees in the direction R so that the second tool mounting face $F_2$ is indexed to the machining position. The turning operation is carried out by the tools $T_{21}$ to $T_{23}$ aligned on the tool mounting face $F_2$ in the above-mentioned manner.

After the machining operation at the above-mentioned first process is finished, and when the machining operation is continued at the second process in which the workpiece W is turned over and held again by the chuck 3, or when another workpiece of a different shape is to be machined, the third and fourth tool mounting faces $F_3$, $F_4$ are indexed to the machining position so that the tools $T_{31}$ to $T_{33}$, $T_{41}$ to $T_{43}$ on the respective tool mounting faces are controlled to move similarly according to the programming.

WHAT IS CLAIMED IS:

1. A machine tool comprising a bed (5); a headstock (1) mounted on said bed (5) and rotatably supporting a spindle (2) having at its front end a chuck (3) for holding a workpiece; a carriage (6) mounted on said bed (5) for horizontal movement in parallel direction to the axis (s) of said spindle; a cross slide mounted on said carriage (6) for horizontal movement in a direction perpendicular to said spindle axis (s); a horizontal indexing shaft (9) rotatably mounted on said cross slide (7) and extending at a level below said spindle axis (s) in a direction perpendicular thereto; a turret (8) secured to said indexing shaft (9) and having a polygonal cross-section, the peripheral faces of said turret (8) serving as tool mounting faces ($F_1$ to $F_4$), each of said tool mounting faces, when indexed to a machining position, being disposed in a horizontal plane between said spindle axis (s) and the axis (C) of said indexing shaft (9); and a plurality of tool holders H holding tools (T) arranged on each of said tool mounting faces in juxtaposed relation in the direction parallel to the axis (C) of said indexing shaft (9).

2. A machine tool according to claim 1, in which said turret (8) has a square cross-section.

3. A machine tool according to claim 1, in which two or more slots (10) are formed in said tool mounting

- 12 -

faces ($F_1$ to $F_4$) and extending parallel to the axis (C) of said indexing shaft (9), said slot serving as a reference for the mounting of said tool holders (H), each of said tool holders (H) having a projection 11, and said projection (11) being embedded in said slot (10) so that said tool holders (H) are positioned in the direction of said spindle axis (s).

4. A machine tool according to claim 3, in which said slots (10) are formed in T-shape, T-nuts being received in said slots (10) and bolts (13) passing through each of said tool holders (H), said bolts threading into said nuts and being tightened so that said tool holders (H) are secured to said tool mounting faces ($F_1$ to $F_4$) of said turret (8) at any required positions in alignment in the direction of the axis (C) of said indexing shaft (9).

5. A machine tool according to claim 1, in which said indexing shaft (9) is indexed by a drive means (15).

Fig.1

Fig.2

Fig.3

# Fig.4

# Fig.5

# Fig.6

# INTERNATIONAL SEARCH REPORT

International Application No **PCT/JP80/00083**

**0037835**

| I. CLASSIFICATION OF SUBJECT MATTER (if several classification symbols apply, indicate all) [3] |
|---|
| According to International Patent Classification (IPC) or to both National Classification and IPC |

Int. Cl.$^3$   B23B 29/32

## II. FIELDS SEARCHED

| Minimum Documentation Searched [4] | |
|---|---|
| Classification System | Classification Symbols |
| I P C | B23B 21/00, B23B 29/00 |

| Documentation Searched other than Minimum Documentation to the Extent that such Documents are Included in the Fields Searched [5] |
|---|

| | |
|---|---|
| Jitsuyo Shinan Koho | 1925 – 1978 |
| Kokai Jitsuyo Shinan Koho | 1971 – 1978 |
| Kokai Tokkyo Koho | 1971 – 1978 |

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| X | GB, A, 1,186,172,          1970-4-2  MOLINS MACHINE COMPANY LIMITED | 1, 5 |
| X | US, A, 3,786,539,          1970-10-9  Index-Werke KG Hahn & Tessky | 1, 5 |
| A | JP, B1, 49-46359,          1974-12-9  Shoun Kosakusho Kabushiki Kaisha | 1,2,5 |
| X | H.E. Shibe and one other (author)  Soya Kazuo and two others (translator)  "Jig Sekkei Seisaku Binran" (1967-3-15)  Kyoritsu Shuppan Kabushiki Kaisha,  P. 83 – P. 86 | 3, 4 |

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search [3] | Date of Mailing of this International Search Report [3] |
|---|---|
| July 2, 1980 (02. 07. 80) | July 21, 1980 (21. 07. 80) |
| International Searching Authority [1] | Signature of Authorized Officer [20] |
| Japanese Patent Office | |

Form PCT/ISA/210 (second sheet) (October 1977)